Europäisches Patentamt

European Patent Office

Office européen des brevets

(19) 

(11) Publication number: **0 175 632**
**B1**

(12) **EUROPEAN PATENT SPECIFICATION**

(45) Date of publication of patent specification: **25.10.89**

(21) Application number: **85630147.8**

(22) Date of filing: **03.09.85**

(51) Int. Cl.⁴: **C 25 D 7/06, B 32 B 15/18,
B 32 B 15/06, B 32 B 25/02**

(54) Quaternary brass alloy coated steel element and rubber reinforced therewith.

(30) Priority: **13.09.84 US 649883**

(43) Date of publication of application:
**26.03.86 Bulletin 86/13**

(45) Publication of the grant of the patent:
**25.10.89 Bulletin 89/43**

(84) Designated Contracting States:
**DE FR GB LU**

(56) References cited:
**GB-A-1 559 147
GB-A-2 039 580
US-A-4 155 816
US-A-4 255 496
US-A-4 347 290
US-A-4 446 197
US-A-4 446 198**

(73) Proprietor: **THE GOODYEAR TIRE & RUBBER
COMPANY
1144 East Market Street
Akron, Ohio 44316-0001 (US)**

(72) Inventor: **Starinshak, Thomas Walter
422 Red Rock Drive
Wadsworth Ohio 44281 (US)**

(74) Representative: **Weyland, J.J. Pierre
Goodyear Technical Center-Luxembourg
L-7750 Colmar-Berg (LU)**

Courier Press, Leamington Spa, England.

EP 0 175 632 B1

**Description**

Field

This invention relates to metal alloy-coated steel elements, particularly wire filaments, and to rubber articles reinforced with such elements, such as for example disclosed in prior art publication US—A 4347290 and GB—A—2039580.

Background

Rubber articles, such as for example, tires, conveyor belts, power transmission belts, timing belts, hoses and like products, are often reinforced by incorporating therein steel reinforcing elements. Pneumatic vehicle tires are often reinforced with cords prepared from brass-coated steel filaments. Such tire cords are frequently composed of high carbon steel coated with a thin layer of brass. Such a tire cord can be a monofilament, but normally is prepared from several filaments which are stranded or cabled together.

In order for rubber articles which are reinforced with steel wire elements to function effectively it is important that good adhesion between the rubber and the steel cord be maintained over a period of time and under ageing conditions. Accordingly, for this and other reasons steel wire reinforcement elements are often coated in brass in order to enhance rubber-metal adhesion.

Although it may not be completely understood, it is generally thought by ones having skill in the art that adhesion of sulfur vulcanized rubber to brass plated steel wire is somewhat dependent upon a bond between the copper in the brass and sulphur in the rubber. Apparently, bonds between the rubber and the reinforcement may occur due to a form of chemical reaction between the brass alloy coating and the rubber at their interface. During the rubber vulcanization process, it is usually desired that a maximum or optimum quantity of bonds are obtained. After such bonds are formed, the number of bonds present are believed to often begin to decrease, possibly by secondary or other reactions. Subsequent to the rubber vulcanization and during the further lifetime of the steel reinforced article, such type of reactions might continue but at much lower rates such as by heat aging, for example, in a running tire. This together with long term oxidative degradation of the rubber itself, might contribute to a degradation of the bond.

It is important to appreciate that, during the initial rubber vulcanization process, the temperature and duration of vulcanization must often be well adapted to both the compounded rubber and the alloy-coated steel wire reinforcement in order to optimize rubber-to-metal adhesion.

Generally, it is understood that vulcanization temperatures in excess of 163°C (325°F) might sometimes be detrimental to optimum rubber-to-brass adhesion. Thus, high temperature vulcanization cycles might result in less than optimum rubber-to-metal adhesion. Therefore high temperature vulcanization cycles have not often been employed to vulcanize rubber articles containing brass-coated steel elements as reinforcements.

The amount of time needed to vulcanize, or cure, a rubber article typically decreases with increasing cure temperatures. Therefore, by increasing cure temperatures, cure cycles can normally be reduced in duration. It is, therefore, possible to reduce the amount of time required in manufacturing vulcanized rubber articles by utilizing higher cure temperature.

However, such high cure temperatures might be detrimental to an optimum rubber/wire bond even at the shorter cure times.

Accordingly, it remains desirable to provide a metal alloy-coated steel element which can be used to reinforce rubber articles, particularly over an extended rubber vulcanization temperature range.

Disclosure and practice of the invention

In accordance with this invention, an element is provided which comprises a steel substrate having a quaternary brass alloy coating thereon consisting essentially of copper and zinc with a minor amount of cobalt and nickel.

More specifically, a steel wire is provided having a quaternary brass alloy coating thereon, apart from trace elements, of 55 to 75 weight percent copper; 1 to 3 weight percent cobalt; and 1 to 3 weight percent nickel, the balance being zinc.

The amounts of the metals are based on the total quaternary alloy.

Such element in the form of a wire or cabled multiple of wires has been observed to be suitable for reinforcement of rubber articles, particularly sulphur-cured rubber articles where the rubber is sulphur-cured while in contact with the reinforcing element.

In the practice of this invention, the element of metal alloy coated steel is preferably prepared by first depositing a layer of copper onto the steel substrate, (such as a steel plate, filament or wire), followed by depositing thereon layers of cobalt and nickel alternately, together or as an alloy or mixture thereof and then completed by depositing a topcoat of zinc following which the layers are diffused together by application of heat (at an elevated temperature) to form an alloy thereof. It is believed that little alloy of the deposited metals is formed with the iron of the steel substrate.

In such preferred method of preparation, concentration gradients of the deposited metals are contained in the resultant alloy.

Thus, in a preferred embodiment, an element comprises a steel substrate, preferably in the form of a

2

wire or cabled multiple of wire, which contains a heterogeneous alloy coating thereon consisting essentially of copper and zinc with a minor amount of cobalt and nickel in which all of the four deposited metals are dispersed within each other. The term "heterogeneous" is used to indicate a substantially continuous phase alloy in which the respective concentrations of the four deposited metals within the alloy coating vary somewhat, usually in the form of concentration gradients from the portion adjacent to the steel substrate to the outer portion of the alloy.

In further accordance with this invention, a composite is provided which comprises a sulfur-cured rubber article containing a reinforcing element of a steel substrate having a quaternary brass alloy coating thereon consisting essentially of copper and zinc with a minor amount of cobalt and nickel.

Such composite is prepared by sulfur curing the rubber while in contact with said reinforcing element.

More specifically, a composite is provided which comprises a rubber article containng a steel wire reinforcing element where said rubber is sulphur-cured in contact with said wire element and where said steel wire element has a quaternary brass alloy coating, apart from trace elements, thereon consisting of 55 to 75 weight percent copper; 1 to 3 weight percent cobalt; and 1 to 3 weight percent nickel, the balance being zinc.

The reinforcing element has been described herein as having a coating thereon of a quaternary brass alloy consisting of copper, zinc, cobalt and nickel. The respective metals are referred to in their metallic or zero valence state as deposited on the steel substrate. It is understood that the alloy coating may undergo some degree of reaction with materials contained in the adjacent rubber compound during the sulphur-curing operation and atmospheric elements over a period of time, sometimes referred to as "ageing". Also, metal oxides may, and usually do, form on the surface of the alloy prior to application of rubber compound to the said elements. Therefore, basic metals of the alloy itself may not entirely remain in their metallic zero valence state.

While alloy itself is referred to as "consisting of", it is to be understood that trace amounts (less than 0.1 weight percent) of other metals may be present either as impurities or as additives for some particular purpose without departing from the basic quaternary alloy description contained therein.

The cobalt/nickel brass alloy coatings of this invention have been observed to substantially improve rubber-to-metal adhesion in articles wherein they are employed to coat metal reinforcing elements. In some cases the quaternary nickel/cobalt brass alloy coatings of this invention make it possible to cure rubber articles containing metal reinforcing elements coated therewith at higher temperatures than would normally be possible using standard brass alloys to coat the metal reinforcing elements.

This invention demonstrates that the presence of small amounts of cobalt and nickel in what is basically a brass alloy (an alloy of copper and zinc) as a coating on steel reinforcing elements in rubber articles can substantially improve adhesion properties between the metal reinforcing element and the rubber. The quaternary cobalt/nickel-brass alloy described herein has been observed to be of particular value for coating steel reinforcement elements for use in tires. Brass is an alloy of copper and zinc which can contain other metals in varying lesser amounts. The quaternary alloys employed as coating in this invention are considered cobalt/nickel brass alloys since they contain 1 to 3 percent cobalt and nickel with the primary metals being copper and zinc.

Rubber articles quite frequently contain steel wire elements as structural reinforcement. Some examples of rubber articles that may contain steel wire reinforcing elements include tires, power transmission belts, conveyor belts, hoses, and a wide variety of other manufactured rubber products and component parts. Such rubber articles are actually composites containing a rubber portion and a metal portion.

The rubber in the composite articles of this invention can be selected from a wide variety of rubbery polymers and mixtures thereof. Since this invention has been developed through the use sulfur cured rubber (in the reinforcement), it is preferred that the rubber be composed primarily of sulfur curable high carbon-to-carbon unsaturation rubbers. Some rubbers which may be used in the compositions of this invention include natural rubber, styrene butadiene rubber, synthetic polyisoprene, polybutadiene, nitrile rubbers, carboxylated nitrile rubber, butyl rubbers, ethylene-propylene-diene rubbers (EPDM), ethylene-propylene rubbers (EPR, and polyisobutylene.

Many terms are used to describe the steel reinforcing elements used to strengthen rubber compositions. The terms "cord", "tire cord", "cable", "strand", "wire", "rod", "plate", and "filament" can all be used to describe steel reinforcing elements used to strengthen, or reinforce, rubber articles. The term "steel element" as used herein is devised to be generic to all articles for reinforcing rubber articles including those listed above. Thus, without being limited hereto, a steel element can be a steel wire, a steel cord, a steel tire cord, a steel tire cord, a steel cable, a steel strand, a steel rod, a steel plate, or a steel filament.

The term "steel" as used in the present specification and claims refers to what is commonly known as carbon steel, which is also called high-carbon steel, ordinary steel, straight carbon steel, and plain carbon steel. An example of such a steel is American Iron and Steel Institute Grade 1070-high-carbon steel (AISI 1070). Such steel owes its properties chiefly to the presence of carbon without substantial amounts of other alloying elements.

The rubber articles of this invention can be produced by various procedures such as for example: (1) coating a metal reinforcement, such as a wire or cord thereof, with the quaternary cobalt/nickel-brass alloy,

3

(2) applying a curative-containing compounded rubber to the metal reinforcement and (3) sulfur-curing (vulcanizing) and shaping the resulting rubber article under conditions of heat and pressure. The rubber articles of this invention differ from other rubber articles in that they are provided with reinforcing steel elements which are coated with a quaternary brass alloy containing about 0.1 to about 10 cobalt and nickel.

In general, metal reinforcing filaments of this invention are coated to a final alloy thickness (after drawing) in the range of about 0.05 microns to about 0.4 microns with the quaternary brass alloy. The quaternary alloy coating preferably has a final thickness in the range of about 0.12 microns to about 0.25 microns.

Various techniques or methods can be employed to coat steel reinforcing elements with the quaternary alloy. One means of effectuating the alloy coating is to dip the steel element which is desired to be coated into a molten bath of the alloy or alloy elements.

A typically more practical technique for applying the quaternary alloy to steel elements is to electroplate layers of copper, cobalt, nickel (or nickel, cobalt) and zinc onto the steel element followed by heating the steel element to a temperature high enough to promote the diffusion of the copper, zinc, cobalt and nickel (at least 450°C). The copper, zinc, cobalt and nickel layers can be electroplated onto a steel element in various ways.

It has been found to be convenient to first apply base coat of a copper layer next to the steel then to alternately apply a cobalt layer, then a nickel layer and finally to apply top coat of a zinc layer as the final step in the electroplating process. The copper, zinc, cobalt and nickel layers should be electroplated onto the steel element in the proportion that it is desired for them to represent in the quaternary cobalt/nickel brass alloy coating.

Numerous electroplating techniques can be employed to deposit the copper, zinc, and cobalt/nickel layers onto the steel elements of this invention. A copper layer can be electroplated onto a steel element utilizing a plating solution containing copper cyanide or copper pyrophosphate. A copper pyrophosphate electroplating solution typically contains about 22 to 38 grams of copper ion per liter and 150 to 250 grams of $P_2O_7$-ions per liter (the ratio of $P_2O_7$-ions to copper ions is from about 6 to 8) with the pH of the solution being in the range of from about 8 to about 9.3. The pH of such a solution can be kept in this range by the addition of an alkaline aqueous solution of potassium hydroxide or with pyrophosphoric acid ($H_4P_2O_7$). It is generally preferred for copper pyrophosphate electroplating solutions to contain about 30 grams of copper ion per liter and about 210 grams of $P_2O_7$-ion per liter with the pH of the solution being about 8.8 to about 9.2. Copper is generally electroplated onto steel elements from copper pyrophosphate plating solution utilizing a current density of about 8 to about 18 amps per square decimeter at a temperature of about 50°C to about 60°C, with about 48°C to about 52°C being preferred.

Numerous electroplating solutions can be employed for depositing a zinc layer onto steel reinforcing elements. Some representative examples of such aqueous solutions include solutions of zinc cyanide, zinc sulfate, zinc chloride, zinc fluoroborate, and zinc pyrophosphate. A typical zinc sulfate electroplating solution will contain from about 40 to about 90 grams of zinc-ion per liter of solution and have a pH of about 1 to about 4.5. A more preferred zinc sulfate electroplating solution will contain about 80 grams of zinc-ion per liter of solution and have a pH of about 3 to about 3.7. Zinc layers are generally deposited from such zinc sulfate electroplating solution utilizing a cathode current density of about 20 to about 30 amps per square decimeter at a temperature ranging from about 16°C to about 28°C with ambient temperature normally being preferred.

Representative examples of electroplating solutions that can be used to deposit a nickel layer on a steel element include nickel and anions such as chloride, chloride-sulfate, chloride-acetate, cyanide, citrate, nitrate, pyrophosphate, fluoroborate, sulfamate, and sulfamate-chloride. Preferably a watts bath containing nickel sulfate ($NiSO_4 \cdot 6\ H_2O$) at 240—340 g/L, nickel chloride ($NiCl_2 \cdot 6H_2O$) at 30—60 g/L, and boric acid ($H_3BO_3$) at 30—40 g/L with a pH of 3.8—5 operator at about 50°C to about 70°C. Generally 300 g/L of nickel sulfate, 50 g/L of nickel chloride, 45 g/L of boric acid at a pH of 4 at 60°C will produce a suitable deposit with cathodic current densities up to 8 A/dm². Further, elimination of wetting agent or brightener additives are desirable.

Representative examples of electroplating solutions that can be used to deposit a cobalt layer on the steel element include cobalt and anions such as chloride, sulfamate, chloride-sulfate, ammonium sulfate and other. Preferably a bath of cobalt sulfate ($CoSO_4 \cdot 7H_2O$) at 330—560 g/L, cobalt chloride ($CoCl_2 \cdot 6H_2O$) at 40—60 g/L, boric acid ($H_3BO_3$) at 30—45 g/L with a pH of 3—5 at 35—43°C will yield a suitable metallic deposit. Preferably a bath of cobalt sulfate with 45 g/L of cobalt chloride and 40 g/L of boric at a pH of 4 and a temperature of 38°C was used. Cathodic current densities up to 7 A/dm² were used. Also, the cobalt/nickel layer can be deposited simultaneously as an nickel-cobalt alloy using a mixed sulfate-chloride bath containing cobalt sulfate ($CoSO_4 \cdot 7H_2O$) 29 g/L, nickel sulfate ($NiSO_4 \cdot 7H_2O$) 300 g/L, nickel chloride ($NiCl_2 \cdot 6H_2O$) 50 g/L, and boric acid 30 g/L with a pH of 3.7—4 will yield a 50/50% alloy. These alloy ratios are current density, temperature, and cobalt concentration dependent.

The four distinct layers of copper, cobalt, nickel and zinc that are formed in a sequential electroplating process can be diffused together to form a quaternary brass alloy by simply heating the steel element on which they are deposited to a temperature of at least 450°C, preferably about 500°C for a few seconds (about 2 to about 10 seconds). Typically, quaternary alloy-coated steel reinforcing wire is further drawn to the final desired filament diameter.

**Example I**

Steel elements that are coated with the quaternary brass alloys of this invention can be assembled into rubber articles by using standard techniques well-known to those skilled in the art for assembling ordinary steel reinforcing elements into such rubber articles. In other words, the quaternary cobalt/nickel brass alloy coated steel wires or filaments, electroplated with copper, cobalt, nickel and zinc, in that order to form a layered coating thereon. The coated wires were then heated to about 500°C for about 4 seconds to thermally diffuse the copper, cobalt, nickel and zinc and form an alloy thereof on the steel filament.

The alloy-coated 1.2 mm diameter wire was drawn through dies to a 0.22 diameter filament and subsequently stranded and cabled into a cord of 4 filaments.

The resultant cord was imbedded in compounded rubber and the rubber sulfur cured to form a composite of rubber reinforced with the cord. Such compounded rubber contains various ingredients including sulfur, accelerators, antioxidants, filters, carbon black, cobalt compounds, processing oils, etc.

Adhesion tests were then conducted on the imbedded cord in order to evaluate and compare the rubber-to-cord adhesion.

The steel wires were electroplated by passing them, sequentially through electroplating baths (rinsing them between baths) at a wire line speed of about 14 feet/minute (4.27 m/min), and diffused using an electric diffusion power of 0.76 kilowatts which produced a wire temperature of about 500°C.

The individual electroplating baths were composed of the following compositions:

(A) Copper:
Copper 30 g/L
pyrophosphate/copper ratio 7
pH=8.8 @ 50°C.

(B) Cobalt:
Cobalt sulfate 330 g/L
Cobalt chloride 45 g/L
Boric acid 40 g/L
pH=4 @ 38°C.

(C) Nickel:
Nickel sulfate 300 g/L
Nickel chloride 50 g/L .
Boric acid 45 g/L
pH=4 @ 50°C.

(D) Zinc:
Zinc 80 g/L
pH 3.2.

The following Table 1 tabulates the percentages of copper, cobalt, nickel and zinc in the respective coatings:

TABLE 1

| Sample | % Cu | % Ni | % Co | % Zn |
|--------|------|------|------|------|
| A | 63.4 | 1.3 | 0.9 | 34.4 |
| B | 61.4 | 1.6 | 1.1 | 35.9 |
| C | 63.9 | 1.6 | 1.7 | 32.8 |
| D | 69.2 | 1.8 | 1.1 | 27.9 |
| E | 63.6 | 2.8 | 2.9 | 30.7 |
| F | 63.2 | 3.4 | 1.0 | 32.4 |
| G | 63.5 | 1.3 | 2.9 | 32.3 |
| Control | 62.1 | — | — | 37.9 |

These steel cords were then embedded in an uncured rubber containing the following general formulations:

5

| | (Parts by weight) | | |
| | Compound A | Compound B | Compound C |
|---|---|---|---|
| Natural rubber | 100 | 100 | 80 |
| Butyl rubber | 0 | 0 | 20 |
| Stearic type acid | 2 | 2 | 22 |
| Zinc oxide | 10 | 10 | 10 |
| Amine antioxidant | 1 | 1 | 1 |
| Sulfur | 2.5 | 5 | 3 |
| Sulfonamide type accelerator | 1 | 1 | 1 |
| Cobalt compound | 3 | 1 | 2 |
| Carbon black | 55 | 55 | 55 |

These rubber articles were then cured at about 345°F (174°C) for 14 minutes to simulate a tire belt edge temperature of about 335°F (168°C). The steel cords in these rubber compositions were then subjected to ASTM D229-73 pull-out test and referred to original adhesion values in newtons. A series of these cured blocks were immersed in an aqueous 5% sodium chloride solution at 32°C and allowed to remain in the solution for a period of three days. These blocks when removed from solution are subjected to the pull-out test and results in newtons are listed as salt aged. Another series of uncured samples were subjected to humidity aging, then cured, followed by the pull-out test. The humidity conditions were 93 percent at 30°C for 10 days. These results of this test in newtons are listed as humidity age adhesion in the following tables.

TABLE 2
Compound A

| Sample | Original | Salt aged | Humidity aged |
|---|---|---|---|
| Control | 293 | 234 | 264 |
| B | 301 | 309 | 274 |
| C | 309 | 284 | 266 |
| D | 357 | 278 | 258 |
| F | 323 | 312 | 296 |
| G | 287 | 261 | 282 |

TABLE 3
Compound B

| Sample | Original | Salt aged | Humidity aged |
|---|---|---|---|
| Control | 359 | 253 | 263 |
| A | 332 | 280 | 283 |
| B | 397 | 303 | 293 |
| C | 266 | 283 | 270 |

As can be readily observed from Table 2 that significant improvements are valid in both original and aged testing. Sample F yielded a 10 percent increase in original and humidity age adhesion, and a 25 percent increase in salt water adhesion.

Table 3 once agains reflects improved adhesion values when quaternary coatings are employed. Sample B reflects adhesion improvements from 9—15 percent when compared to the control. The same

6

procedures and compounds as employed for the previous examples except that the rubber compositions were vulcanized utilizing a higher cure to simulate a tire belt edge temperature of about 350°F (177°C). Conditions of about 370°F (188°C) for 16 minutes will be sufficient when ASTM D225.73 pull out test is employed.

### TABLE 4
#### Compound A

| Sample | Original | Salt aged | Humidity aged |
|--------|----------|-----------|---------------|
| Control | 276 | 188 | 234 |
| B | 292 | 182 | 271 |
| F | 309 | 141 | 282 |

### TABLE 5
#### Compound B

| Sample | Original | Salt aged | Humidity aged |
|--------|----------|-----------|---------------|
| Control | 319 | 226 | 262 |
| A | 342 | 290 | 318 |
| C | 291 | 296 | 307 |
| D | 334 | 298 | 310 |
| G | 306 | 290 | 280 |

### TABLE 6
#### Compound C

| Sample | Original | Salt aged | Humidity aged |
|--------|----------|-----------|---------------|
| Control | 272 | 275 | 275 |
| A | 271 | 282 | 296 |
| B | 272 | 274 | 313 |
| E | 271 | 288 | 283 |

Examining Tables 4 through 6 one can detect significant improvements in original and aged adhesion tests. For example in Table 4 there is a 5—10% improvement in original adhesion and 12—16% improvement in humidity aged valves. In Table 5, there is up to an 8% increase in original salt water adhesion while a maximum of 10% adhesion increase for humidity age. In compound C, Table 6, humidity ages adhesion is increased by 13%.

To further demonstrate the advantage of cobalt-nickel quaternary brass coatings for wire reinforcement in compounded rubber, a comparison with ternary brass coatings on steel wire were performed at both cure conditions.

The ternary brass coatings basically correspond to the quaternary brass coatings except that either the cobalt or the nickel are not used as components thereof. The ternary coated wire are prepared in accordance with the procedures of Example I. The ternary coating compositions are shown in Table 7 and identified as Samples X, Y and Z.

### TABLE 7

| Sample | % Cu | % Ni | % Co | % Zn |
|--------|------|------|------|------|
| X | 62.8 | 0 | 0.8 | 36.4 |
| Y | 64.2 | 1.4 | 0 | 34.4 |
| Z | 63.6 | 3.1 | 0 | 33.3 |

Tables 8, 9 and 10 show comparative adhesion values for the quaternary brass coated filaments and the ternary brass coated filaments for various compounded rubber cure temperatures.

TABLE 8
Compound B, 335°F (168°C) cure

| Sample | Original | Salt aged | Humidity aged |
|---|---|---|---|
| Control | 309 | 228 | 268 |
| A (Quaternary) | 320 | 342 | 304 |
| X (Ternary) | 305 | 217 | 263 |
| Y (Ternary) | 318 | 178 | 265 |
| F (Quaternary) | 328 | 269 | 262 |
| Z (Ternary) | 299 | 231 | 270 |

Sample A (quaternary brass coating) yielded the best overall adhesion in all of these tests. Further, Sample F (quaternary brass coating) demonstrated improved original and salt aged adhesion values.

TABLE 9
Compound A, 350°F (177°C) cure

| Sample | Original | Salt aged | Humidity aged |
|---|---|---|---|
| Control | 278 | 143 | 246 |
| A (Quaternary) | 292 | 142 | 278 |
| X (Ternary) | 261 | 131 | 240 |
| Y (Ternary) | 243 | 121 | 221 |

TABLE 10
Compound B, 350°F (177°C) cure

| Sample | Original | Salt aged | Humidity aged |
|---|---|---|---|
| Control | 342 | 171 | 272 |
| A (Quaternary) | 353 | 208 | 309 |
| X (Ternary) | 313 | 192 | 252 |
| Y (Ternary) | 321 | 169 | 256 |
| F (Quaternary) | 258 | 244 | 300 |
| Z (Ternary) | 322 | 137 | 294 |

At high cures, the quaternary coated filaments outperformed the respective ternary coatings as shown in Table 9.

In Table 10, the quaternary coating A demonstrated the highest original and aged adhesion values compared to the respective ternary coatings. Quaternary coating F demonstrated superior aged adhesion values.

**Claims**

1. A steel wire having a quaternary brass alloy coating thereon consisting, apart from trace elements, of 55 to 75 weight percent copper, 1 to 3 weight percent cobalt, and 1 to 3 weight percent nickel, the balance being zinc.

2. Method of preparing a steel wire according to claim 1 characterized by first depositing a layer of copper thereon followed by depositing thereover layers of cobalt and nickel alternately, together or as an alloy mixture thereof, then followed by depositing thereover a layer of zinc, whereby said deposited layers are fuzed together by application of heat.

3. The method of claim 2 characterized in that the metals are deposited by electric plating and that the deposited layers are diffused at a temperature in the range of about 450° to about 550°C.

4. A composite which comprises a rubber containing a steel wire reinforcing element in the form of a single wire or a multiple of cabled wires where said rubber is sulphur-cured in contact with the said wire element characterized in that said steel wire has a quaternary brass alloy coating thereon consisting, apart from trace elements, 55 to 75 weight percent copper, 1 to 3 weight percent cobalt, and 1 to 3 weight percent nickel, the balance being zinc.

5. A composite according to claim 4 characterized in that the copper and zinc components of said coating in that the copper and zinc components of said coating consist respectively of 60 to 67 weight percent copper and 27 to 38 weight percent zinc.

6. Tire according to claim 4 containing said wire reinforcement in the form of a cabled multiple of wires.

7. Belt according to claim 4 containing said wire reinforcement in the form of a cabled multiple of wires.

## Patentansprüche

1. Stahldraht, der einen Überzug aus einer quaternären Messinglegierung aufweist, bestehend, neben Spurenelementen, aus 55 bis 75 Gew.-% Kupfer, 1 bis 3 Gew.-% Kobalt und 1 bis 3 Gew.-% Nickel, während sich der Rest aus Zink zusammensetzt.

2. Verfahren zur Herstellung eines Stahldrahts gemäß Anspruch 1, dadurch gekennzeichnet, daß zuerst eine Schicht aus Kupfer darauf aufgebracht wird, worauf sich die Aufbringung von Kobalt und Nickel alternierend zusammen oder als Legierungsmischung davon anschließt und anschließend eine Schicht aus Zink aufgebracht wird, wobei die aufgebrachten Schichten durch Einwirkung von Wärme miteinandere verschmolzen werden.

3. Verfahren nach Anspruch 2, dadurch gekennzeichnet, daß die Metalle galvanisch aufgebracht werden und die aufgebrachten Schichten bei einer Temperatur im Bereich von ungefähr 450°C bis ungefähr 550°C diffundiert werden.

4. Verbund aus einem Kautschuk, enthaltend ein Stahldrahtverstärkungselement in Form eines einzelnen Drahts oder einer Vielzahl von verkabelten Drähten, wobei der Kautschuk sich schwefelvulkanisiert in Kontakt mit dem Drahtelement befindet, dadurch gekennzeichnet, daß der Stahldraht einen Überzug aus einer quaternären Messinglegierung aufweist, die sich, neben Spurenelementen, zu 55 bis 75 Gew.-% aus Kupfer, 1 bis 3 Gew.-% aus Kobalt und 1 bis 3 Gew.-% aus Nickel zusammensetzt, während der Rest aus Zink besteht.

5. Verbund nach Anspruch 4, dadurch gekennzeichnet, daß die Kupfer- und Zinkkomponente des Überzugs aus 60 bis 67 Gew.-% Kupfer bzw. 27 bis 38 Gew.-% Zink bestehen.

6. Reifen nach Anspruch 4, enthaltend die erwähnte Drahtverstärkung in Form eines Kabels aus mehreren Drähten.

7. Band nach Anspruch 4, enthaltend die Drahtverstärkung in Form eines Kabels aus mehreren Drähten.

## Revendications

1. Fil d'acier revêtu d'un alliage de laiton quaternaire consistant, outre des éléments à l'état de traces, en 55 à 75% en poids de cuivre, 1 à 3% en poids de cobalt, et 1 à 3% en poids de nickel, le reste étant du zinc.

2. Procédé pour fabriquer un fil d'acier selon la revendication 1, caractérisé en ce que l'on dépose d'abord sur ledit fil une couche de cuivre puis des couches de cobalt et nickel alternativement, ensemble, ou sous forme d'alliage, et enfin que l'on dépose dessus une couche de zinc, lesdites couches déposées étant fondues les unes dans les autres par action de la chaleur.

3. Procédé de la revendication 2, caractérisé en ce que les métaux sont déposés par galvanoplastie et que les couches déposées sont diffusées à une température se situant dans l'intervalle d'environ 450°C à environ 550°C.

4. Composite qui comprend un caoutchouc contenant un élément renforçateur en fil d'acier sous forme d'un fil unique ou d'un câble de tels fils où ledit caoutchouc est vulcanisé par du soufre au contact dudit élément de fil, caractérisé en ce que ledit fil d'acier est revêtu d'un alliage de laiton quaternaire consistant, outre des éléments à l'état de traces, en 55 à 75% en poids de cuivre, 1 à 3% en poids de cobalt, et 1 à 3% en poids de nickel, le rest étant du zinc.

5. Composite selon la revendication 4, caractérisé en ce que les composants cuivre et zinc dudit revêtement consistent respectivement en 60 à 67% en poids de cuivre et 27 à 38% en poids de zinc.

6. Pneu selon la revendication 4 renfermant ledit renforçateur de fil sous forme d'un câble de fils multiples.

7. Bande selon la revendication 4 renfermant ledit renforçateur de fil sous forme d'un câble de fils multiples.